# EUROPEAN PATENT APPLICATION

(11) **EP 3 869 467 A1**
(43) Date of publication of application: **25.08.2021**
(21) Application number: 21159011.2
(22) Date of filing: 24.02.2021
(51) Int. Cl.: G06T 15/20, G06T 17/00, G06T 7/55

(54) **PHOTOGRAMMETRY TO IMPOSTOR REPRESENTATION**

(30) Priority: 24.02.2020 US 202062980741 P; 17.02.2021 US 202117177364
(71) Applicant: Rockwell Collins, Inc., Cedar Rapids, IA 52498 (US)
(72) Inventor: BISHOP, Jonathan, Boise, ID 83706 (US); FLOWERS-FINLEY, Darren, Salt Lake City, UT 84108 (US)
(74) Representative: Dehns

(57) **Abstract**

A method is disclosed. The method includes preparing one or more images for a photogrammetry modeling program; generating a photogrammetry model using the photogrammetry modeling program based on the prepared one or more images; preparing the photogrammetry model for an impostor process; performing the impostor process to generate an impostor representation of the generated photogrammetry model; and integrating the generated impostor representation of the generated photogrammetry model into a level of detail process to generate a three-dimensional model of the object.

## Description

### BACKGROUND

Current methods for building models take a lot of time and resources. Further, the visual standards used to build the models are of lower quality and the technology used has aged.

### SUMMARY

A system is disclosed, in accordance with one or more embodiments of the disclosure. The system includes one or more imaging devices configured to capture one or more images of an object. The system further includes one or more controllers communicatively coupled to the one or more imaging devices, the one or more controllers including memory and one or more processors configured to execute one or more program instructions causing the one or more processors to: prepare the one or more images for a photogrammetry modeling program, the photogrammetry modeling program stored in the memory; generate a photogrammetry model using the photogrammetry model program based on the prepared one or more images; prepare the photogrammetry model for an impostor process; perform the impostor process to generate an impostor representation of the generated photogrammetry model; and integrate the generated impostor representation of the generated photogrammetry model into a level of detail process to generate a three-dimensional model of the object.

In some embodiments, preparing the one or more images for a photogrammetry modeling program may include: selecting an object to image with the one or more imaging devices; capturing the one or images of the selected object, the imaging device configured to capture the one or more images of the selected object at one or more distances and one or more angles; generating an imaging sequence of the one or more images; and providing the imaging sequence to the photogrammetry modeling program.

In some embodiments, generating a photogrammetry model using the photogrammetry model program may include: generating one or more depth maps for each image of the one or more images; generating one or more key points for each image of the one or more images; generating a sparse cloud based on the one or more generated depth maps and the one or more generated key points; generating a dense cloud using the generated sparse cloud; generating a high polygon mesh using the generated dense cloud; generating texture for the high polygon mesh based on the dense cloud; generating a low polygon mesh of the high polygon mesh; baking the generated texture for the high polygon mesh onto the low polygon mesh to generate a baked low polygon mesh; and combining the generated baked low polygon mesh with the photogrammetry model.

In some embodiments, generating a photogrammetry model using the photogrammetry model program may further include correcting one or more texture errors one the photogrammetry model; and generating one or more physically based rendering texture maps.

In some embodiments, preparing the photogrammetry model for an impostor process may include: providing the photogrammetry model to an impostor program configured to perform the impostor process, the impostor program stored in memory; positioning the photogrammetry model in a scene; generating one or more material characteristics of the object; and setting up one or more light settings.

In some embodiments, performing the impostor process to generate an impostor representation of the photogrammetry model may include: generating an impostor polygon; receiving a sprite sheet; mapping at least a first image angle to a first image of the one or more images on the sprite sheet; and performing linear interpolation on the one or more mapped images.

In some embodiments, the one or more controllers may be further configured to: test one or more textures of the three-dimensional model.

In some embodiments, the imaging device may include one or more cameras.

A method is disclosed, in accordance with one or more embodiments of the disclosure. The method includes preparing one or more images for a photogrammetry modeling program. The method further includes generating a photogrammetry model using the photogrammetry modeling program based on the prepared one or more images. The method further includes preparing the photogrammetry model for an impostor process. The method further includes performing the impostor process to generate an impostor representation of the generated photogrammetry model. The method further includes integrating the generated impostor representation of the generated photogrammetry model into a level of detail process to generate a three-dimensional model of the object.

In some embodiments, the preparing the one or more images for a photogrammetry modeling program may include: selecting an object to image with the one or more imaging devices; capturing the one or images of the selected object, the imaging device configured to capture the one or more images of the selected object at one or more distances and one or more angles; generating an imaging sequence of the one or more images; and providing the imaging sequence to the photogrammetry modeling program.

In some embodiments, the generating a photogrammetry model using the photogrammetry model program may include: generating one or more depth maps for each image of the one or more images; generating one or more key points for each image of the one or more images; generating a sparse cloud based on the one or more generated depth maps and the one or more generated key points; generating a dense cloud using the generated sparse cloud; generating a high polygon mesh using the generated dense cloud; generating texture for the high polygon mesh based on the dense cloud; generating a low polygon mesh of the high polygon mesh; baking the generated texture for the high polygon mesh onto the low polygon mesh to generate a baked low polygon mesh; and combining the generated baked low polygon mesh with the photogrammetry model.

In some embodiments, the generating a photogrammetry model using the photogrammetry model program may further include correcting one or more texture errors one the photogrammetry model; and generating one or more physically based rendering texture maps.

In some embodiments, the preparing the photogrammetry model for an impostor process may include: providing the photogrammetry model to an impostor program configured to perform the impostor process, the impostor program stored in memory; positioning the photogrammetry model in a scene; generating one or more material characteristics of the object; and setting up one or more light settings.

In some embodiments, the performing the impostor process to generate an impostor representation of the photogrammetry model may include: generating an impostor polygon; receiving a sprite sheet; mapping at least a first image angle to a first image of the one or more images on the sprite sheet; and performing linear interpolation on the one or more mapped images.

In some embodiments, the method may further include: testing one or more textures of the three-dimensional model.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a system for generating a photogrammetry model including impostor representation, in accordance with one or more embodiments of the present disclosure;
FIG. 2 illustrates a flow diagram depicting a method or process for generating a photogrammetry model, in accordance with one or more embodiments of the disclosure;
FIG. 3 illustrates a flow diagram depicting a method or process for preparing one or more images for a photogrammetry modeling program, in accordance with one or more embodiments of the disclosure;
FIG. 4 illustrates an example image sequence used for preparing the one or more images for the photogrammetry modeling program, in accordance with one or more embodiments of the disclosure;
FIG. 5 illustrates a flow diagram depicting a method or process for preparing the photogrammetry model for an impostor process, in accordance with one or more embodiments of the disclosure;
FIG. 6 illustrates an example of a depth map of an exemplary object, in accordance with one or more embodiments of the disclosure;
FIG. 7 illustrates an example of a sparse cloud of an exemplary object, in accordance with one or more embodiments of the disclosure;
FIG. 8 illustrates an example dense cloud of an exemplary object, in accordance with one or mor embodiments of the disclosure;
FIG. 9 illustrates an example high polygon mesh of an exemplary object, in accordance with one or more embodiments of the disclosure;
FIG. 10 illustrates the example high polygon mesh, as shown in FIG. 9, including one or more identified problem areas, in accordance with one or more embodiments of the disclosure;
FIG. 11 illustrates an example low polygon mesh of an exemplary object, in accordance with one or more embodiments of the disclosure;
FIG. 12 illustrates an example generated photogrammetry model used for the impostor process, in accordance with one or more embodiments of the disclosure;
FIG. 13 illustrates a flow diagram depicting a method or process for performing the impostor process, in accordance with one or more embodiments of the disclosure;
FIG. 14A illustrates an example imaging device configuration for one or more impostor representations, in accordance with one or more embodiments of the disclosure;
FIG. 14B illustrates an example imaging device configuration for one or more impostor representations, in accordance with one or more embodiments of the disclosure;
FIG. 14C illustrates an example imaging device configuration for one or more impostor representations, in accordance with one or more embodiments of the disclosure;
FIG. 14D illustrates an example imaging device configuration for one or more impostor representations, in accordance with one or more embodiments of the disclosure;
FIG. 15 illustrates an example impostor representation, in accordance with one or more embodiments of the disclosure;
FIG. 16 illustrates a flow diagram depicting a method or process for integrating a generated impostor representation into a level of detail process, in accordance with one or more embodiments of the disclosure;
FIG. 17 illustrates an example view of an impostor polygon facing an imaging device, in accordance with one or more embodiments of the disclosure;
FIG. 18 illustrates an example view of an impostor polygon with texture applied, in accordance with one or more embodiments of the disclosure; and
FIG. 19 illustrates an example view of one or more models including different textures to test memory usage of each model, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

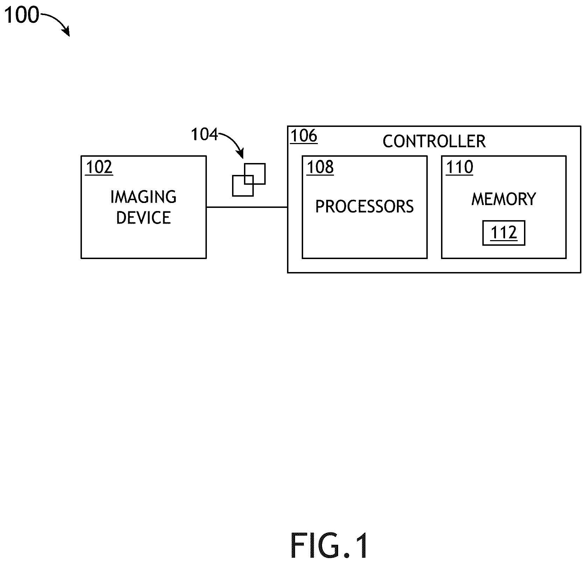

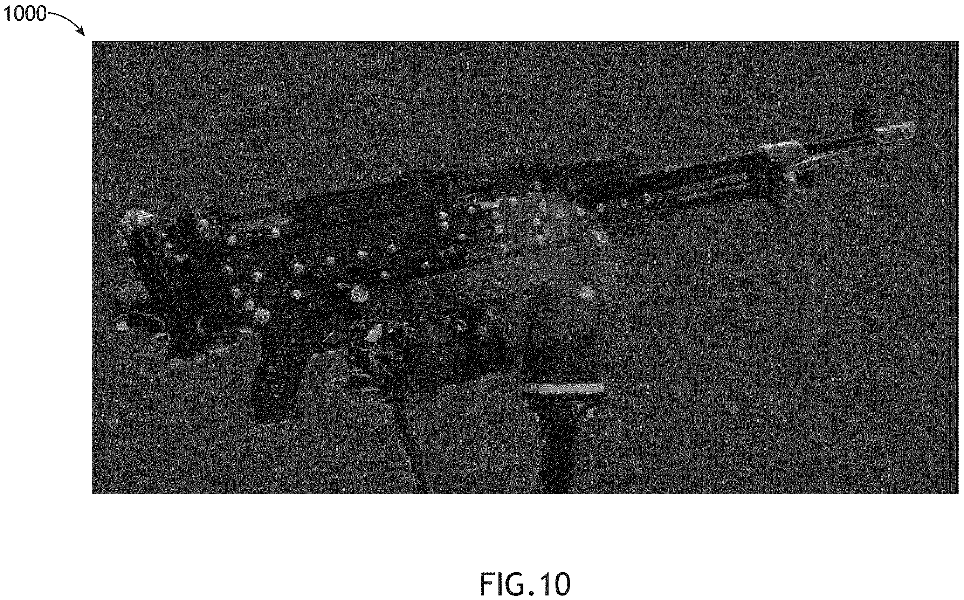

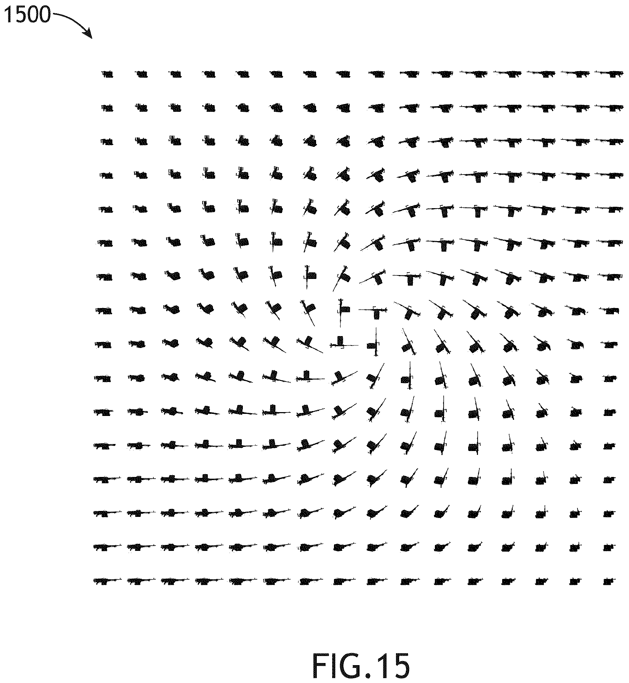

FIGS. 1-19 generally illustrate a system and method for generating a photogrammetry model including impostor representation, in accordance with one or more embodiments of the disclosure.

Current methods for building models take a lot of time and resources. Further, the visual standards for building models are of lower quality and the technology used is aged. For example, the model design may be limited by the polygon count, file size, and texture space requirements. Further, the level of detail (LOD) involved must be built from the model and such process may be arduous, time consuming, and expensive. Models in the flight simulation industry have a below par visual fidelity compared to other industries (e.g., entertainment industry) and the processes to create them take copious amounts of time and cost substantial dollars.

By way of an example, a typical flight simulation must render approximately 300,000 km² of land at approximately 60 frames a second. To prevent dips in framerate, the simulation typically can only have between 80,000-100,000 polygons on a screen at a time. In addition, the simulations must be able to render different sensors. This requires multiple systems to be run simultaneously, which requires each sensor to have its own file, textures, models, and associated hardware. To meet these standards, the system would need increased database capabilities and a change in software and/or hardware.

As such, it would be beneficial to provide a system and method that cures one or more shortfalls previously mentioned. Broadly, embodiments of the present disclosure are directed to a system and method for generating a photogrammetry model with impostor level of detail (LOD) representations. For example, a photogrammetry modeling program may be configured to create a realistic three-dimensional (3D) photogrammetry model of one or more real-world objects and the model may then be converted into an impostor configured to represent the realistic model at a distance. In this regard, the LOD and impostor representations may limit the amount of data that needs to be stored in memory, such that the controller is not overloaded (e.g., CPU and GPU).

FIG. 1 illustrates a system 100 for generating an impostor representation of a photogrammetry model, in accordance with one or more embodiments of the present disclosure.

The system 100 may include an imaging device 102 configured to capture one or more images 104 of an object. It is noted herein that the imaging device 102 may include any imaging device known in the art including, but not limited to, a compact camera, a zoom compact camera, an advanced compact camera, an action camera, a digital single lens reflex (DSLR) camera, a compact mirrorless camera, a medium format camera, a drone, a mobile device camera, or the like.

The system 100 may include one or more controllers 106 configured to receive one or more images 104 from the imaging device 102. For example, the imaging device 102 may communicatively couple to the controller 106 via a wireless connection (e.g., WiFi, Bluetooth, Raspberry Pi, or the like) or wireline connection (e.g., USB cord, lightening cable, AUX cord, or the like).

The one or more controllers 106 may include at least one of one or more processors 108, memory 110 configured to store one or more sets of program instructions 112, and/or one or more communication interfaces.

The one or more processors 108 may be communicatively coupled to memory 110, wherein the one or more processors 108 are configured to execute a set of program instructions 112 stored on memory 110, the set of program instructions configured to cause the one or more processors 108 to carry out various functions and steps of the present disclosure. In this regard, the controller 106 may be configured to: prepare images for a photogrammetry modeling program; generate a photogrammetry model using the photogrammetry modeling program; prepare the photogrammetry model for an impostor process; perform the impostor process; and integrate the generated impostor into a level of detail process. Each of these steps/functions of the controller 106 will each be described in further detail herein.

The one or more processors 108 provides processing functionality for at least the one or more controllers 106 and may include any number of processors, microcontrollers, circuitry, field programmable gate array (FPGA) or other processing systems, and resident or external memory for storing data, executable code, and other information accessed or generated by the one or more controllers 106. The one or more processors 108 may execute one or more software programs (e.g., the one or more sets of program instructions 112) embodied in a non-transitory computer readable medium (e.g., the memory 110) that implement techniques described herein. The one or more processors 108 are not limited by the materials from which it is formed or the processing mechanisms employed therein and, as such, may be implemented via semiconductor(s) and/or transistors (e.g., using electronic integrated circuit (IC) components), and so forth.

The memory 110 may be an example of tangible, computer-readable storage medium that provides storage functionality to store various data and/or program code associated with operation of the one or more controllers 106 and/or one or more processors 108, such as software programs and/or code segments, or other data to instruct the one or more processors 108 and/or other components of the one or more controllers 106, to perform the functionality described herein. Thus, the memory 110 may store data, such as a program of instructions for operating the one or more controllers 106, including its components (e.g., one or more processors 108, the one or more communication interfaces, or the like), and so forth. It should be noted that while a single memory 110 is described, a wide variety of types and combinations of memory (e.g., tangible, non-transitory memory) may be employed. The memory 110 may be integral with the one or more processors 108, may include stand-alone memory, or may be a combination of both. Some examples of the memory 110 may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The one or more controllers 106 may be configured to perform one or more process steps, as defined by the one or more sets of program instructions 112. The one or more process steps may be performed iteratively, concurrently, and/or sequentially. The one or more sets of program instructions 112 may be configured to operate via a control algorithm, a neural network (e.g., with states represented as nodes and hidden nodes and transitioning between them until an output is reached via branch metrics), a kernel-based classification method, a Support Vector Machine (SVM) approach, canonical-correlation analysis (CCA), factor analysis, flexible discriminant analysis (FDA), principal component analysis (PCA), multidimensional scaling (MDS), principal component regression (PCR), projection pursuit, data mining, prediction-making, exploratory data analysis, supervised learning analysis, boolean logic (e.g., resulting in an output of a complete truth or complete false value), fuzzy logic (e.g., resulting in an output of one or more partial truth values instead of a complete truth or complete false value), or the like. For example, in the case of a control algorithm, the one or more sets of program instructions 112 may be configured to operate via proportional control, feedback control, feedforward control, integral control, proportional-derivative (PD) control, proportional-integral (PI) control, proportional-integral-derivative (PID) control, or the like.

The one or more communication interfaces may be operatively configured to communicate with components of the one or more controllers 106. For example, the one or more communication interfaces may be configured to retrieve data from the one or more processors 108 or other devices, transmit data for storage in the memory 110, retrieve data from storage in the memory 110, and so forth. The one or more communication interfaces 816 may also be coupled (e.g., physically, electrically, and/or communicatively) with the one or more processors 108 to facilitate data transfer between components of the one or more controllers 106 and the one or more processors 108. It should be noted that while the one or more communication interfaces is described as a component of the one or more controllers 106, one or more components of the one or more communication interfaces may be implemented as external components coupled (e.g., physically, electrically, and/or communicatively) to the one or more controllers 106 via a wired and/or wireless connection. The one or more controllers 106 may also include and/or connect to one or more input/output (I/O) devices. In some embodiments, the one or more communication interfaces includes or is coupled (e.g., physically, electrically, and/or communicatively) to a transmitter, receiver, transceiver, physical connection interface, or any combination thereof.

The one or more controllers 106 may be coupled (e.g., physically, electrically, and/or communicatively) to one or more user interfaces. The one or more user interfaces may include and/or be configured to interact with one or more display devices. The one or more user interfaces may include and/or be configured to interact with one or more user input devices.

The one or more communication interfaces may be operatively configured to communicate with one or more user interfaces. The one or more controllers 106 and the one or more user interfaces may be separate components (e.g., have separate housings and/or separate chassis). It is noted herein, however, that the one or more controllers 106 and the one or more user interfaces may be components integrated in a single housing and/or on a single chassis.

The one or more display devices may include any display device known in the art. For example, the one or more display devices may include, but are not limited to, a liquid crystal display (LCD), a light-emitting diode (LED) display, an organic light-emitting diode (OLED) based display, or the like. Those skilled in the art should recognize that a variety of display devices may be suitable for implementation in the disclosure and the particular choice of display device may depend on a variety of factors, including, but not limited to, form factor, cost, and the like. In a general sense, any display device capable of integration with the one or more user input devices (e.g., touchscreen, bezel mounted interface, keyboard, mouse, trackpad, and the like) is suitable for implementation in the disclosure.

The one or more user input devices may include any data input device known in the art. For example, the one or more user input devices may include, but are not limited to, a keyboard, a keypad, a touchscreen, a lever, a knob, a scroll wheel, a track ball, a switch, a dial, a sliding bar, a scroll bar, a slide, a touch pad, a paddle, a steering wheel, a joystick, a button, a bezel input device or the like. In the case of a touchscreen interface, those skilled in the art should recognize that a large number of touchscreen interfaces may be suitable for implementation in the disclosure. For instance, a display device may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device is suitable for implementation in the disclosure.

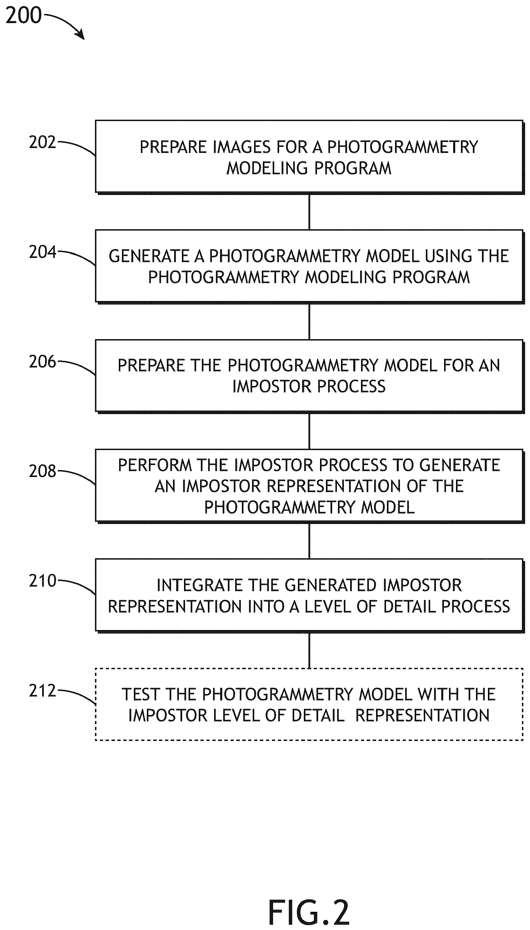

FIG. 2 illustrates a flow diagram depicting a method or process 200 for generating an impostor representation of a photogrammetry model, in accordance with one or more embodiments of the disclosure.

In a step 202, the one or more images 104 may be prepared for a photogrammetry modeling program.

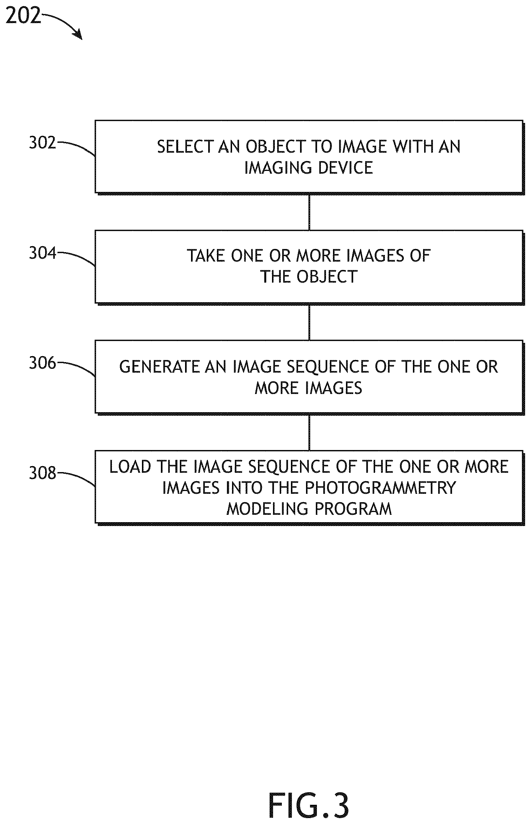

FIG. 3 illustrates a flow diagram depicting a method or process 202 for preparing one or more images for a photogrammetry modeling program, in accordance with one or more embodiments of the disclosure.

In a step 300, an object to image with the imaging device 102 may be selected. For example, a user may select an object to image such that the user may generate a photogrammetry model with impostor representation of such object. It is noted herein that the object selected may determine which imaging process may be required in step 302.

In a step 302, the object may be imaged using the imaging device 102 and one or more images 104 may be taken of the object. For example, the imaging device 102 may be configured to take one or more images 104 of the object from different angles and distances. It is noted herein that the object may be imaged using any process known in the art suitable for capturing sufficient detail of the object. For example, a larger object may be captured using a drone in order to sufficiently capture the detail of the large object. By way of another example, a smaller object may be captured using a camera and a turntable.

In a step 304, an image sequence of the one or more images 104 may be generated. The one or more images that produce the image sequence may be configured to capture the object at a variety of distances, heights, angles, or the like. For example, the one or more controllers may be configured to produce an image sequence of the one or more images 104.

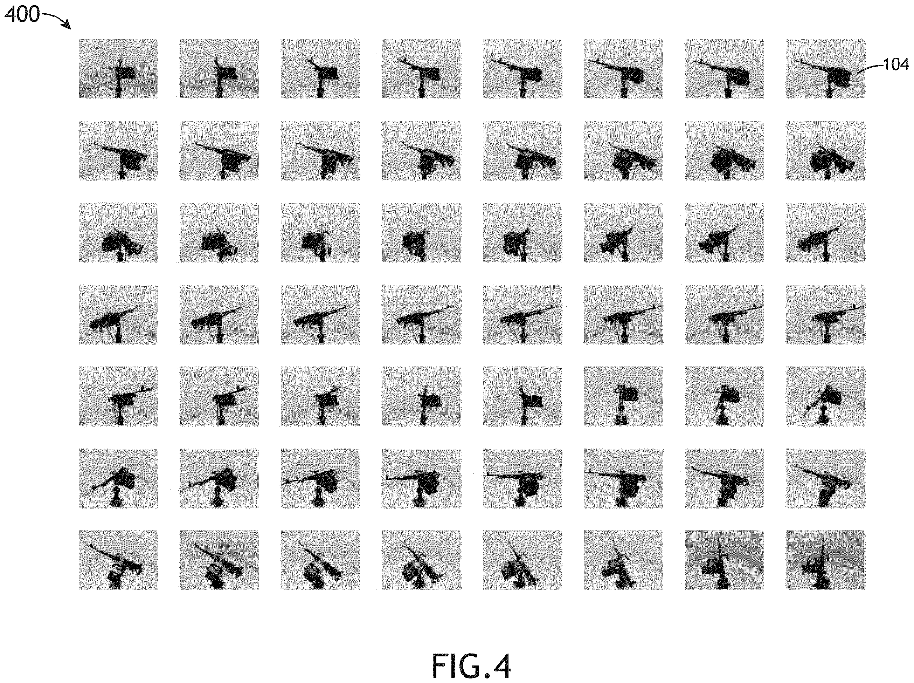

In a step 306, the image sequence may be loaded into a photogrammetry modeling program. For example, a photogrammetry modeling program, stored in memory, may be configured to receive the image sequence. An example imaging sequence 400 is shown in FIG. 4.

Referring back to FIG. 2, in a step 204, a photogrammetry model may be generated using a photogrammetry modeling program. For example, the one or more controllers 106 may be configured to generate a photogrammetry model using the photogrammetry model program stored in memory on the controller. It is noted herein that the photogrammetry modeling program may include any photogrammetry modeling known in the art suitable for generating a photogrammetry model.

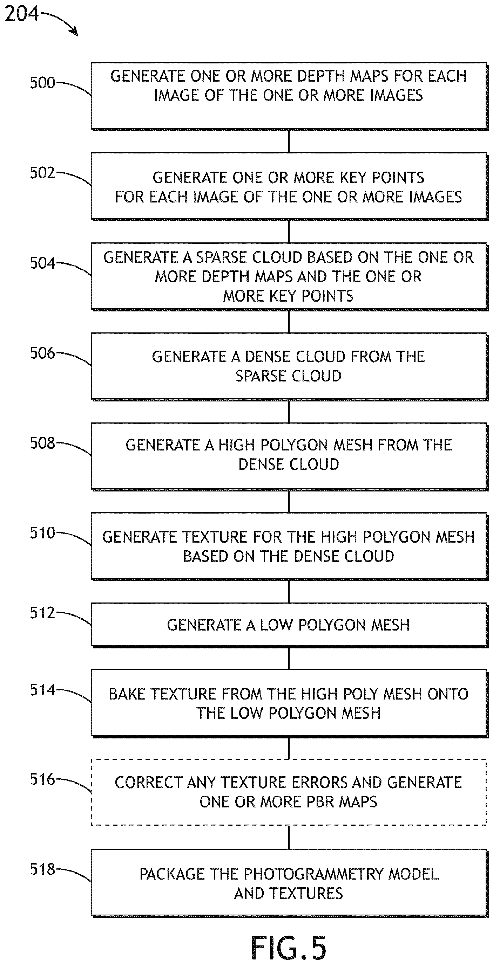

FIG. 5 illustrates a flow diagram depicting a method or process 204 for generating the photogrammetry model using the photogrammetry modeling program, in accordance with one or more embodiments of the disclosure.

In a step 500, one or more depth maps may be generated for each image of the one or more images 104. For example, the one or more controllers 106 may be configured to generate one or more depth maps for each image of the one or more images 104. The one or more depth maps may be color coded representations of the distance of an object from the imaging device 102. For instance, red may indicate a close distance from the imaging device and blue may indicate a far distance from the imaging device.

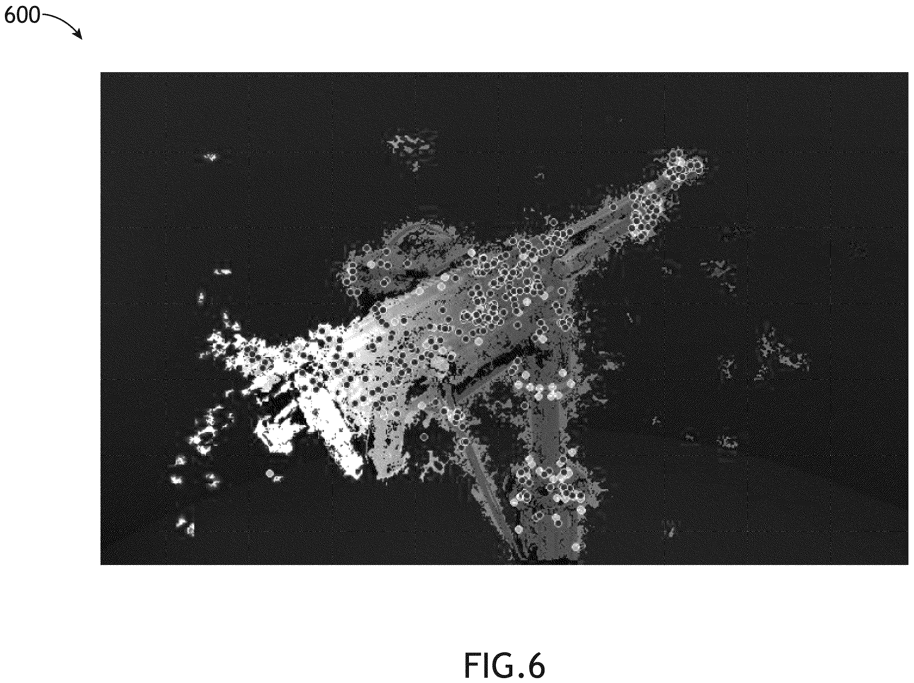

FIG. 6 illustrates an example depth map 600 of an exemplary object (e.g., a gun), in accordance with one or more embodiments of the disclosure. By way of an example, the one or more controllers 106 may be configured to generate a depth map 600 for an image 104 of a gun. The depth map 600 may be color coded to represent the distance of the gun from the imaging device 102.

In a step 502, one or more key points may be generated for each image of the one or more images based the generated one or more depth maps. For example, the one or more controllers 106 may be configured to generate one or more key points based on one or more key features in each image of the one or more images. For instance, the one or more key points may be gathered from one or more images that share a location or color information.

In a step 504, a sparse cloud may be generated using the one or more depth maps and the one or more key points. For example, the one or more controllers 106 may be configured to generate a sparse cloud using the one or more depth maps and the one or more key points (generated in steps 500, 502). For instance, the one or more controllers 106 may be configured to assign each key point of the one or more key points one or more key areas. For instance, a key point may be color coded and placed in the corresponding spot based on the one or more depth maps to build the object.

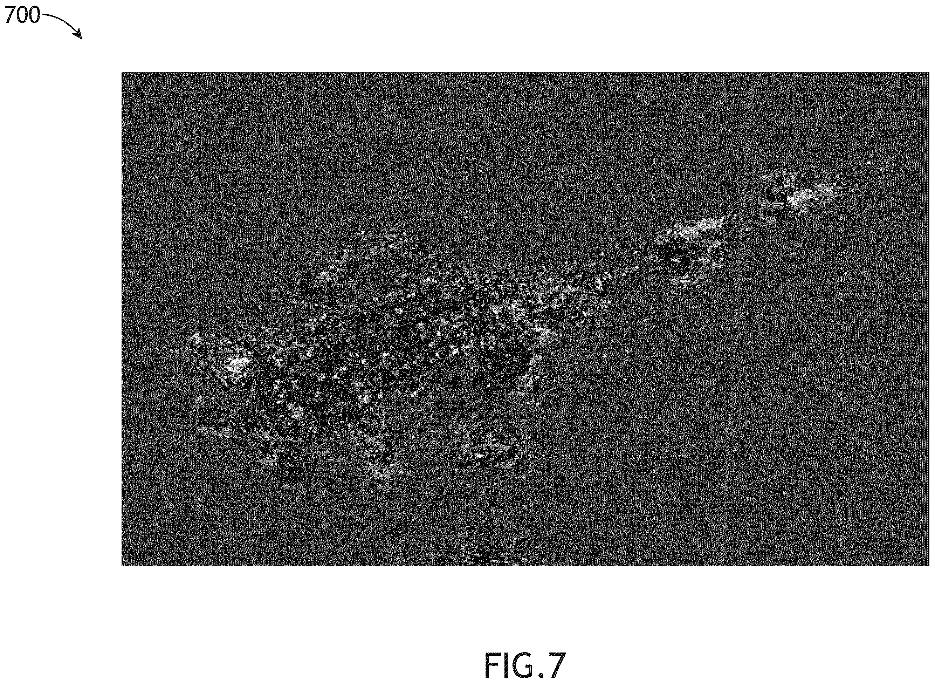

FIG. 7 illustrates an example sparse cloud 700 an exemplary object (e.g., a gun), in accordance with one or more embodiments of the disclosure. By way of an example, the one or more controllers 106 may be configured to generate a sparse cloud 700 of the gun using the one or more depth maps and the one or more key points.

In a step 506, a dense cloud may be generated from the sparse cloud. For example, the one or more controllers 106 may be configured to generate a dense cloud based on the sparse cloud (generated in step 504). It is noted herein that the term "dense cloud" may refer to a denser version of a spare cloud.

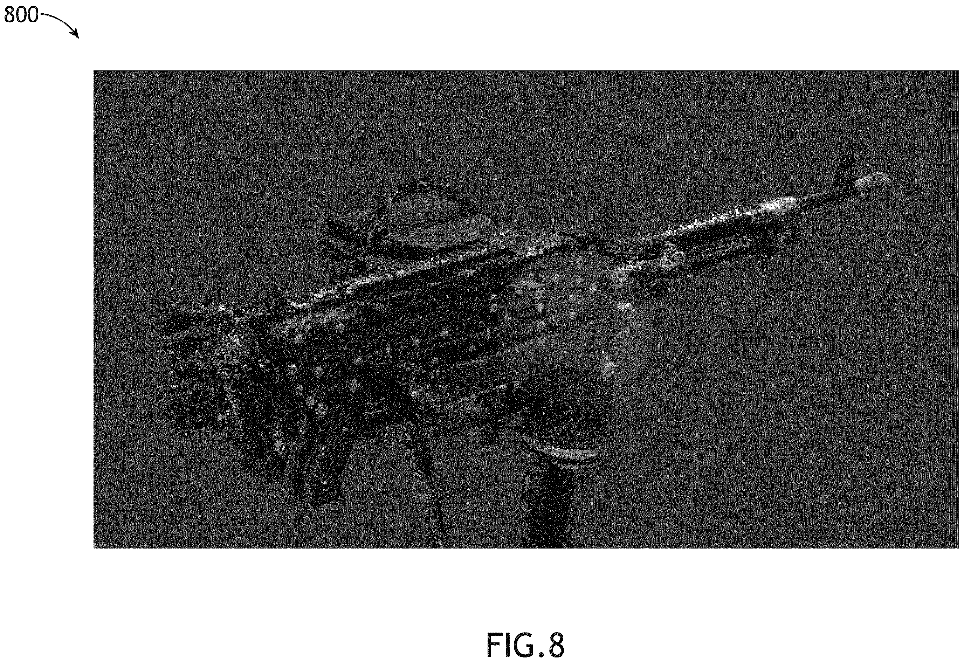

FIG. 8 illustrates an example dense cloud 800 an exemplary object (e.g., a gun), in accordance with one or more embodiments of the disclosure. By way of an example, the one or more controllers 106 may be configured to generate a sparse cloud 800 based on the sparse cloud (e.g., sparse cloud 700 shown in FIG. 7).

In a step 508, a high polygon mesh may be generated based on the dense cloud. For example, the one or more controllers 106 may be configured to generate a high polygon mesh based on the dense cloud (generated in step 504). The high polygon mesh may include any number of polygons. For example, the high polygon mesh may include millions of polygons.

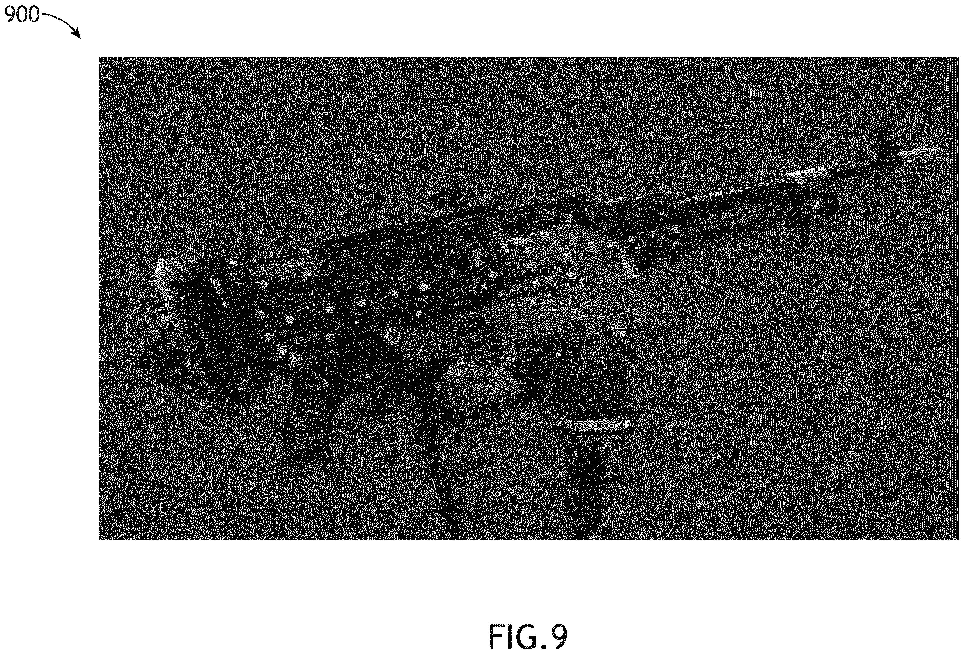

FIG. 9 illustrates an example high polygon mesh 900 an exemplary object (e.g., a gun), in accordance with one or more embodiments of the disclosure. By way of an example, the one or more controllers 106 may be configured to generate a high polygon mesh 900 based on the dense cloud (e.g., dense cloud 800 shown in FIG. 8). For instance, the one or more controllers 106 may be configured to generate a high polygon mesh 900 including approximately four million polygons.

In a step 510, texture for the high polygon mesh may be generated based on the dense cloud. For example, the one or more controllers 106 may be configured to generate texture for the high polygon mesh based on the dense cloud. For instance, the one or more controllers 106 may be configured to generate texture for the high polygon mesh using vertex color from the dense cloud.

In a step 512, a low polygon mesh may be generated. For example, the one or more controllers 106 may be configured to generate a low polygon mesh. The low polygon mesh may include any number of polygons. For example, the low polygon mesh may include between 1,000-80,000 polygons.

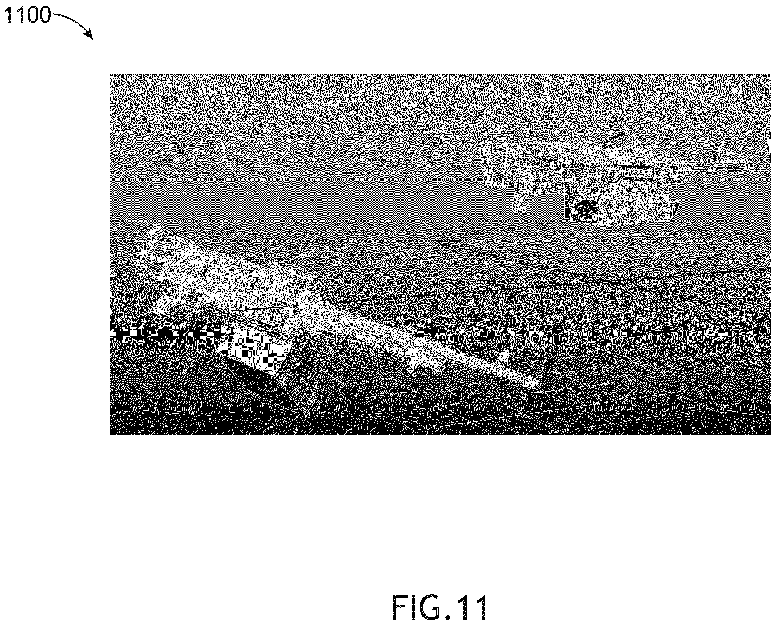

FIG. 11 illustrates an example low polygon mesh 1100 an exemplary object (e.g., a gun), in accordance with one or more embodiments of the disclosure. By way of an example, the one or more controllers 106 may be configured to generate a low polygon mesh 1100 based on the high polygon mesh (e.g., high polygon mesh 900) For instance, the one or more controllers 106 may be configured to decimate the high polygon mesh 900 including approximately four million polygons to approximately 4,000 polygons. It is noted herein that decimating a mesh is the process of reducing the number of polygons it is made of.

As shown in FIG. 9, in the event that the textures include one or more errors, the one or more errors may be corrected. For example, a user may use the user input device to correct the one or more errors. Further, there may be areas of the mesh that need to be cleaned up in a 3D modeling program before being converting into an impostor. For example, the gun (shown in FIG. 9) may need to be decimated and have the green tinted hue removed.

Further, it is noted herein that to decimate the mesh it must be brought into a 3D modeling program that is capable of retopologizing meshes. For purposes of the present disclosure, unless otherwise noted herein, retopologizing is the process of redefining the topology of the mesh. When the mesh is finished being retopologized/decimated it is ready to be brought back into the photogrammetry modeling program and re-baked with high fidelity textures. After the textures have been baked the green hue needs to be removed. This can be done by editing the texture in any photo editing software (e.g., photoshop). With the unwanted hue removed, a base Albedo texture map is produced.

In a step 514, the texture from the high polygon mesh may be baked onto the low polygon mesh. For example, the one or more controllers 106 may be configured to bake the texture from the high polygon mesh onto the low polygon mesh. For instance, the one or more controllers 106 may be configured to generate a final texture from the original one or more images 104.

In an optional step 516, one or more physically based rendering (PBR) maps may be generated. For example, the one or more controllers 106 may be configured to generate one or more PBR maps. In this regard, the photogrammetry model may be adjusted to accurately represent real-world materials. For instance, realistic shading/lighting models may be used along with measured surface values to accurately represent real-world materials of the photogrammetry model.

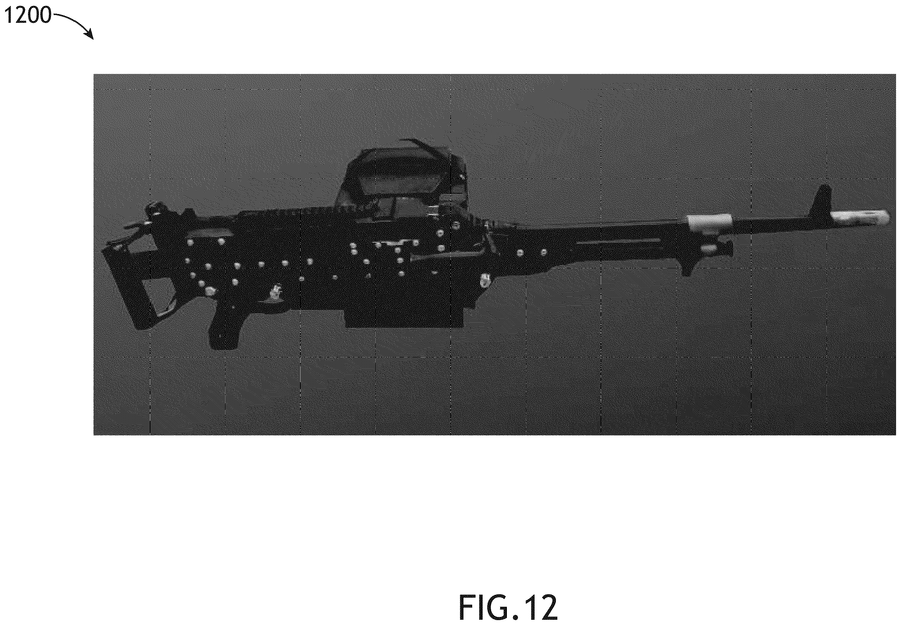

In a step 518, the photogrammetry model and the textures from the high polygon and low polygon mesh may be packaged. For example, the one or more textures and mesh may be packed together (as shown in FIG. 12). It is noted herein that one or more additional texture maps may be generated based on the asset requirements (e.g., normal, bump, roughness, metallic, Ambient Occlusion maps, or the like), such that these one or more additional textures may further be packed together.

Referring back to FIG. 2, in a step 206, the photogrammetry model may be prepared for an impostor process. For example, the photogrammetry model 1200, as shown in FIG. 12, may be prepared for an impostor process.

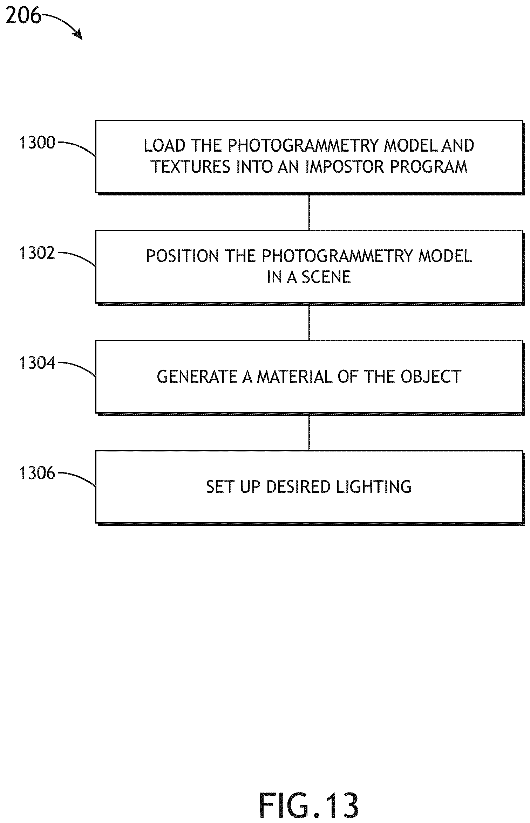

FIG. 13 illustrates a flow diagram depicting a method or process 206 for performing the impostor process, in accordance with one or more embodiments of the disclosure.

In a step 1300, the photogrammetry model and textures generated in step 518 (e.g., photogrammetry model 1200 shown in FIG. 12) may be loaded into an impostor program stored in memory on the controller 106. It is noted herein that the impostor program may include any program known in the art including, but not limited to, Maya, 3ds Max, Blender, Houdini, or the like. The impostor process may be configured to use one or more rendered images of the photogrammetry model and compile the images into a sprite sheet and project those individually rendered images onto a single polygon.

In a step 1302, the photogrammetry model may be positioned in a scene (or environment). For example, the photogrammetry model may be rotated and dragged via a user input device such that the photogrammetry model is positioned within the scene (or environment).

In a step 1304, a material of the object may be generated. For example, when the object is a gun, the material generated may be one or more metals.

In a step 1306, one or more characteristics of the photogrammetry model are adjusted. For example, the lighting of the photogrammetry model may be adjusted.

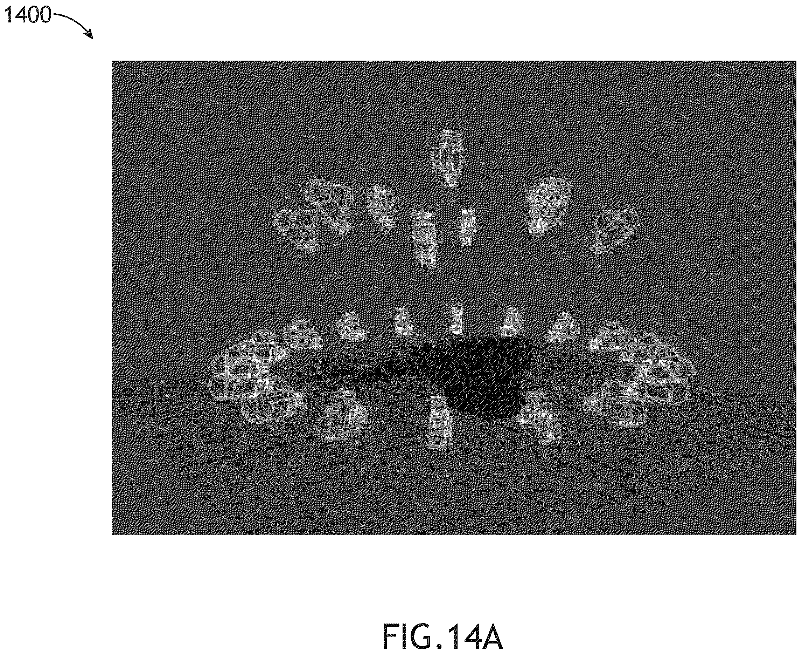

FIGS. 14A-14D illustrates a variety of imaging setups 1400-1430. It is noted herein that when determining the imaging process used to capture the one or more images, it is important to consider the desired type of impostor representation (e.g., hemi-octahedron, full-octahedron, full 360, single rotation axis, animation, or the like).

For example, for a hemi-octahedron static object (as shown in FIG. 14A), a camera render setup 1400 is needed to maximize blending between images on the impostor. In this setup, renders of the object are taken that would only be needed when viewing the impostor from a downward angle. It is noted herein that this example is the standard for static objects that are only seen from the base of the object to the top.

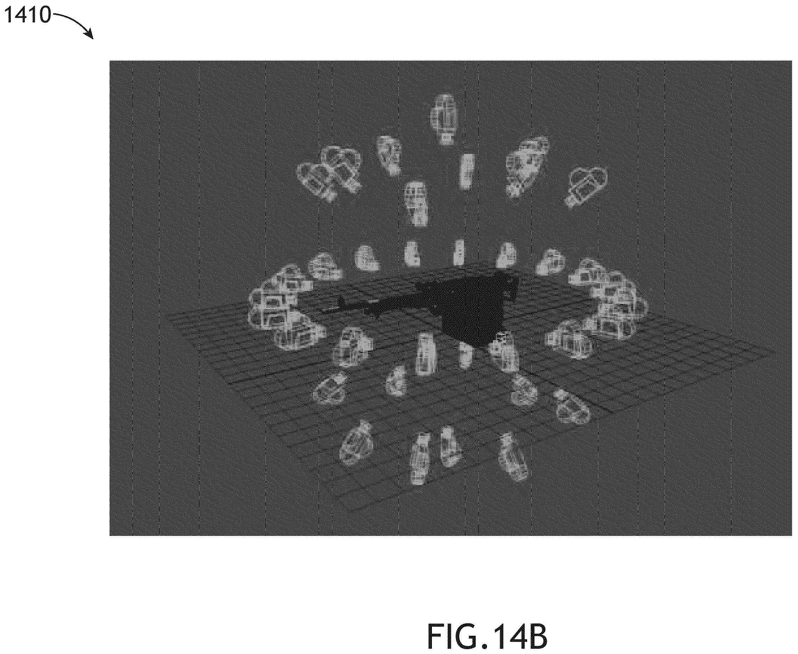

By way of another example, for a full-octahedron static object (as shown in FIG. 14B), a camera render setup 1410 is needed to maximize blending between images on the impostor with a view from any angle. It is noted herein that this example is the standard for static objects that require the impostor to be seen from any angle.

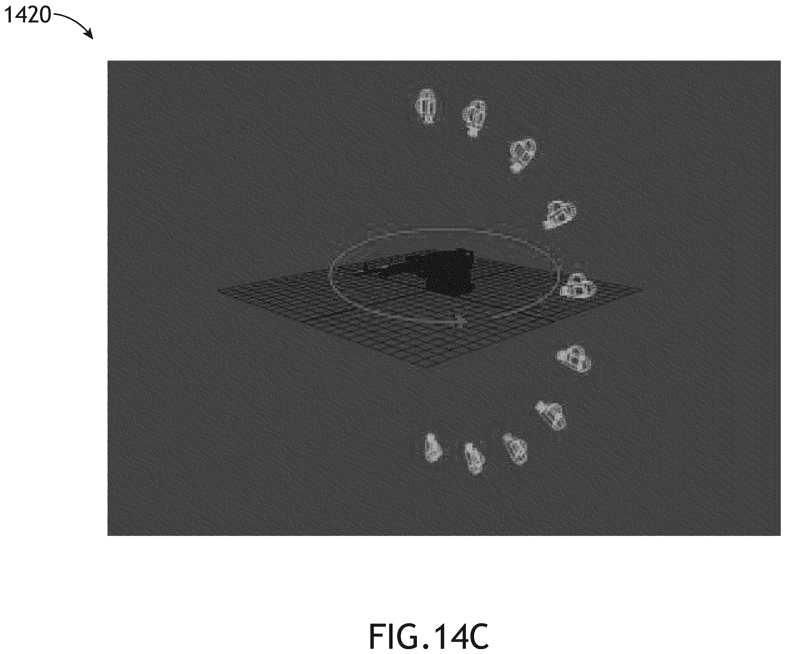

By way of another example, for a full 360 static object (as shown in FIG. 14C), a camera render setup 1420 is needed that takes renders of the object at set intervals around an object with a 360° view.

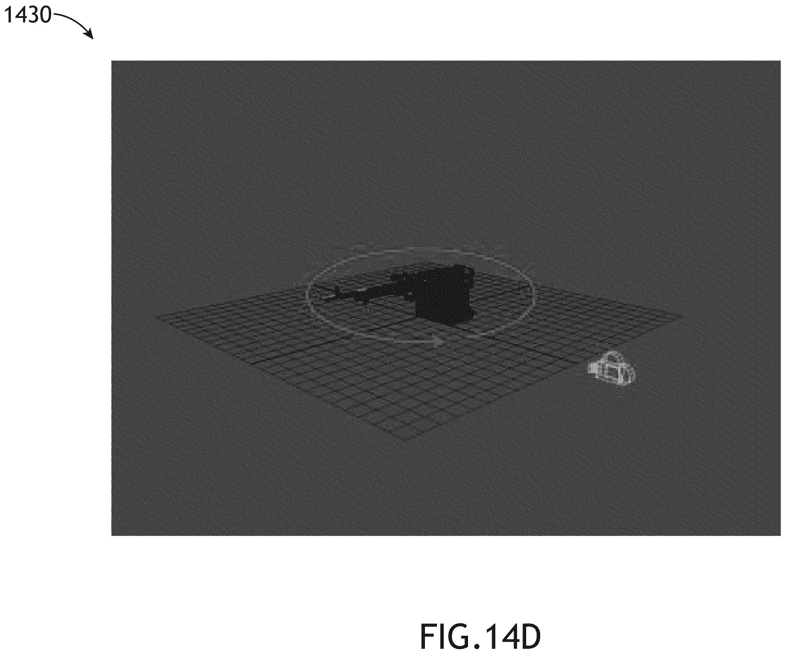

By way of another example, for a single rotation axis static object (as shown in FIG. 14D), a camera render setup 1430 is needed that takes renders of the object on one axis all the way around the object. It is noted herein that this method is best for an impostor that is locked to a particular axis.

By way of another example, for animation, any of the camera rendering setups described above may be used. In this example, a specific texture sheet for each frame of animation is required. It is noted herein that this example may be used for character (human/animal), vehicle and visual effect animations. Due to having a texture sheet for each frame of animation, the animation has many frames, the amount of texture sheets can vary. This is all dependent on the type and length of animations whether it be a character or a complex building explosion.

Referring back to FIG. 2, in a step 208, the impostor process may be performed.

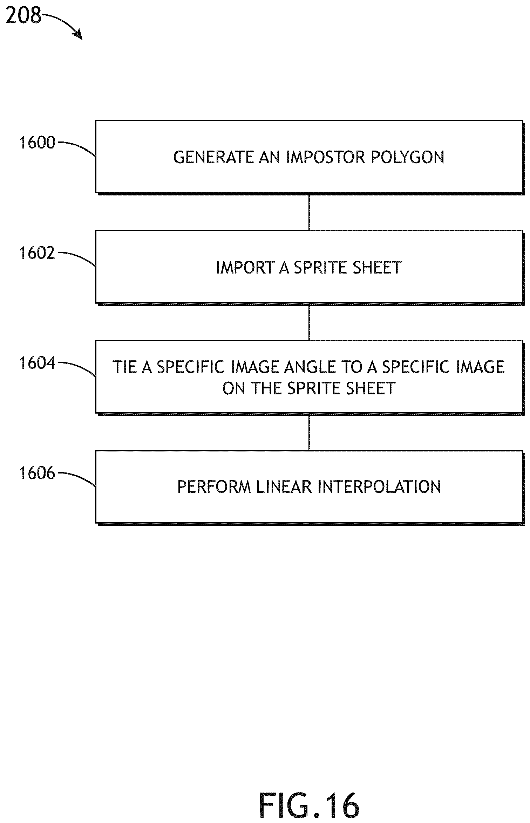

FIG. 16 illustrates a flow diagram depicting a method or process 208 for integrating a generated impostor representation into a level of detail process, in accordance with one or more embodiments of the disclosure.

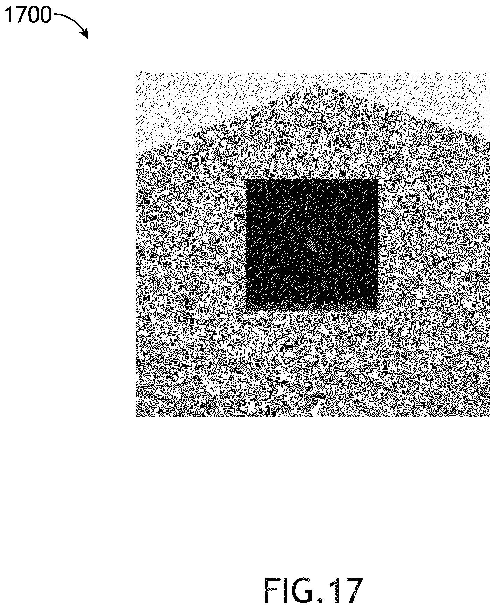

In a step 1600, an impostor polygon may be generated. For example, a texture sheet 1500 may be rendered out and include images of a variety of imaging angles put together in one image. For example, as shown in FIG. 17, an impostor polygon 1700 may be generated using the impostor program.

In a step 1602, a sprite sheet may be imported in the impostor program. It is noted herein that the term "sprite sheet" may refer to one or more textured images complied into a texture atlas. It is noted herein that some software, such as Houdini, auto generates the associated Impostor polygonal file at the same time as the texture. This saves time and allows for quicker iteration if needed. When having to create your own polygon, create it in your 3D geometry editor of choice such as Maya, 3ds Max or Blender.

For example, the sprite sheet may be imported and each individual rendered image of the sheet may be project onto a single polygon (e.g., an impostor representation). It is noted herein that when importing the sprite sheet it is advantageous to have a single polygon (or poly) (e.g., the image 1700) that is constantly facing the imaging device, as shown in FIG. 17. Each image angle is tired to a particle image on the sprite sheet and will show the dedicated image on the polygon when the image angle changes. Further, it is noted herein that for other applications, lock one or more axis of rotation as needed. The locking method is selected based on the use case. For instance, if flying over vehicles never require seeing them from the side or bottom use a Hemi-Octahedron impostor. If viewing the same object from the side or below is required; a Full-Octahedron or Full 360 impostor might work best.

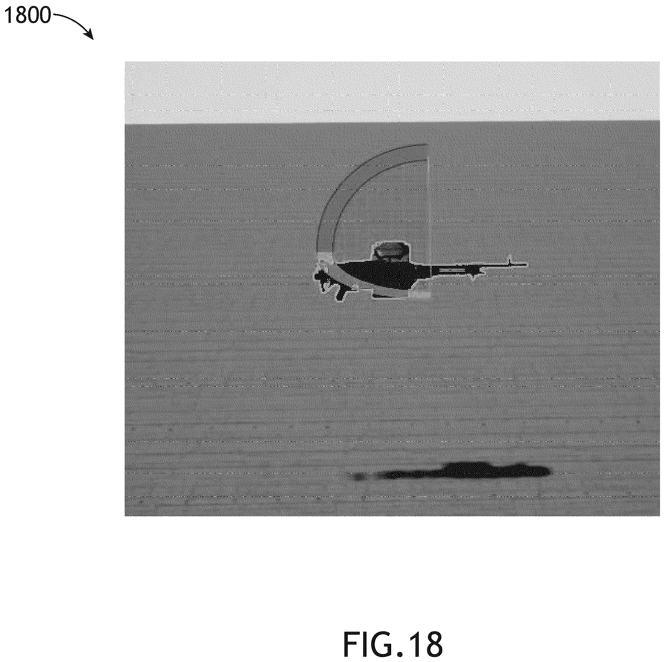

In a step 1604, once the polygon is moving and facing the imaging device, respective images on the sprite sheet may be tied to a specific image angle. Depending on the amount of image renders that were done during the rendering process there may be many. The intended outcome is to have a very specific image from the sprite sheet be viewed on the polygon at specified image angles in the real time engine from the eyepoint to the center of the impostor. For example, FIG. 18 illustrates an example view 1800 of an impostor representation with texture applied.

In a step 1606, once all the images are tied to specific viewing angles, when the camera eyepoint changes from one viewing angle to another, linear interpolation (LERP) may occur. Without the LERP, the images will pop and seem out of place. It is noted herein that the more image angle images that are set up, the smoother the transition of the image LERP will be.

Referring back to FIG. 2, in a step 210, the generated impostor is integrated into a level of detail (LOD) process. For example, the generated impostor may be integrated into a real-time asset's LOD process using one or more LODs. In this regard, one LOD may be for a higher LOD representation of the asset model and the other may be for the impostor. It is noted herein that if more than one LOD of the model is required, it is important that the impostor is assigned the highest LOD. An optimization breakdown may be used to illustrate the LOD assignment and/or impostor usage for an example test object.

For purposes of the present disclosure "level of detail" or "LOD" refers to a process that creates multiple versions of a model for one or more distances from the eyepoint.

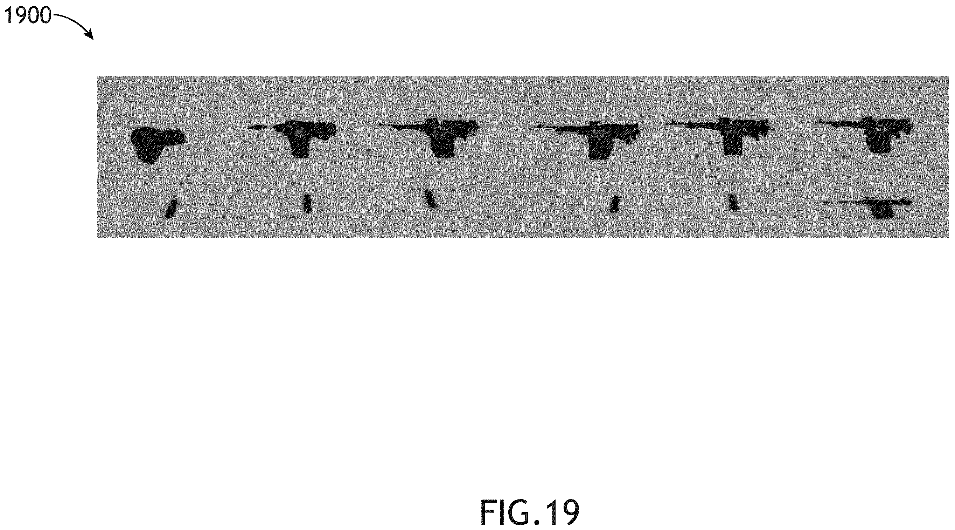

Referring back to FIG 2, in an optional step 212, the photogrammetry model with the impostor LOD representation may be tested. For example, as shown in FIG. 19, the model may be tested with one or more different texture size impostors. It is noted herein, that the use of testing may be used to determine how the impostors affect memory usage. Once tested, the model may be fine turned and one or more issues may be corrected.

Although FIGS. 4, 6-12, 14A-14D, 15, 17-19 illustrate the object/model as a gun, it is noted herein that the object/model may be any real-world object suitable for photogrammetry modeling and impostor representation. The aforementioned figures are provided merely for illustrative purposes and therefore should not be construed as limiting the scope of the present disclosure.

The methods 200, 202, 206, 208, 210, 212 and/or one or more steps of such methods are not limited to the steps and/or sub-steps provided. The methods 200, 202, 206, 208, 210, 212 and/or one or more steps of such methods may include more or fewer steps and/or sub-steps. The methods 200, 202, 206, 208, 210, 212 and/or one or more steps of such methods may perform the steps and/or sub-steps in an order other than provided. Therefore, the above description should not be interpreted as a limitation on the scope of the disclosure but merely an illustration.

It is noted herein that the system and method for generating a photogrammetry model with impostor LOD representations may have a number of advantages.

First, the polygon load on the real-time engine (e.g., the LOD engine) may be significantly reduced. For example, the system may go from rendering a few hundred objects at once to a few thousand of the same object as a distance.

Second, high fidelity realistic looking assets that are low pact are easily adaptable and allow for quick iteration.

Third, there are significant time and cost savings in the initial model development process.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system, comprising:
one or more imaging devices (102) configured to capture one or more images of an object; and
one or more controllers (106) communicatively coupled to the one or more imaging devices, the one or more controllers including memory (110) and one or more processors (108) configured to execute one or more program instructions causing the one or more processors to:
prepare (202) the one or more images for a photogrammetry modeling program, the photogrammetry modeling program stored in the memory;
generate (204) a photogrammetry model using the photogrammetry model program based on the prepared one or more images;
prepare (206) the photogrammetry model for an impostor process;
perform (208) the impostor process to generate an impostor representation of the generated photogrammetry model; and
integrate (210) the generated impostor representation of the generated photogrammetry model into a level of detail process to generate a three-dimensional model of the object.

2. The system of Claim 1, wherein preparing the one or more images for the photogrammetry modeling program comprises:
selecting (302) an object to image with the one or more imaging devices;
capturing (304) the one or images of the selected object, the imaging device configured to capture the one or more images of the selected object at one or more distances and one or more angles;
generating (306) an imaging sequence of the one or more images; and
providing (308) the imaging sequence to the photogrammetry modeling program.

3. The system of Claim 1 or 2, wherein generating the photogrammetry model using the photogrammetry model program comprises:
generating one or more depth maps for each image of the one or more images;
generating one or more key points for each image of the one or more images;
generating a sparse cloud based on the one or more generated depth maps and the one or more generated key points;
generating a dense cloud using the generated sparse cloud;
generating a high polygon mesh using the generated dense cloud;
generating texture for the high polygon mesh based on the dense cloud;
generating a low polygon mesh of the high polygon mesh;
baking the generated texture for the high polygon mesh onto the low polygon mesh to generate a baked low polygon mesh; and
combining the generated baked low polygon mesh with the photogrammetry model.

4. The system of Claim 3, further comprising:
correcting one or more texture errors one the photogrammetry model; and
generating one or more physically based rendering texture maps.

5. The system of any preceding Claim, wherein preparing the photogrammetry model for the impostor process comprises:
providing the photogrammetry model to an impostor program configured to perform the impostor process, the impostor program stored in memory;
positioning the photogrammetry model in a scene;
generating one or more material characteristics of the object; and
setting up one or more light settings.

6. The system of any preceding Claim, wherein performing the impostor process to generate an impostor representation of the photogrammetry model comprises:
generating an impostor polygon;
receiving a sprite sheet;
mapping at least a first image angle to a first image of the one or more images on the sprite sheet; and
performing linear interpolation on the one or more mapped images.

7. The system of any preceding Claim, wherein the one or more controllers are further configured to:
test one or more textures of the three-dimensional model.

8. The system of any preceding Claim, wherein the imaging device includes one or more cameras.

9. A method, comprising:
preparing one or more images for a photogrammetry modeling program;
generating a photogrammetry model using the photogrammetry modeling program based on the prepared one or more images;
preparing the photogrammetry model for an impostor process;
performing the impostor process to generate an impostor representation of the generated photogrammetry model; and
integrating the generated impostor representation of the generated photogrammetry model into a level of detail process to generate a three-dimensional model of an object.

10. The method of Claim 9, wherein the preparing the one or more images for the photogrammetry modeling program comprises:
selecting the object to image with one or more imaging devices;
capturing the one or images of the selected object, the imaging device configured to capture the one or more images of the selected object at one or more distances and one or more angles ;
generating an imaging sequence of the one or more images; and
providing the imaging sequence to the photogrammetry modeling program.

11. The method of Claim 9 or 10, wherein the generating the photogrammetry model using the photogrammetry model program comprises:
generating one or more depth maps for each image of the one or more images;
generating one or more key points for each image of the one or more images;
generating a sparse cloud based on the one or more generated depth maps and the one or more generated key points;
generating a dense cloud using the generated sparse cloud;
generating a high polygon mesh using the generated dense cloud;
generating texture for the high polygon mesh based on the dense cloud;
generating a low polygon mesh of the high polygon mesh;
baking the generated texture for the high polygon mesh onto the low polygon mesh to generate a baked low polygon mesh; and
combining the generated baked low polygon mesh with the photogrammetry model.

12. The method of Claim 11, further comprising:
correcting one or more texture errors one the photogrammetry model; and
generating one or more physically based rendering texture maps.

13. The method of any of Claims 9 to 12, wherein the preparing the photogrammetry model for the impostor process comprises:
providing the photogrammetry model to an impostor program configured to perform the impostor process, the impostor program stored in memory;
positioning the photogrammetry model in a scene;
generating one or more material characteristics of the object; and
setting up one or more light settings.

14. The method of any of Claims 9 to 13, wherein the performing the impostor process to generate the impostor representation comprises:
generating an impostor polygon;
receiving a sprite sheet;
mapping at least a first image angle to a first image of the one or more images on the sprite sheet; and
performing linear interpolation on the one or more mapped images.

15. The method of any of Claims 9 to 14, further comprising:
testing one or more textures of the three-dimensional model.
